# EUROPEAN PATENT APPLICATION

(11) **EP 1 860 077 A1**
(43) Date of publication of application: **28.11.2007**
(21) Application number: 06715393.2
(22) Date of filing: 08.03.2006
(51) Int. Cl.: C03C 27/12, B60J 1/00

(54) **INTERLAYER FOR LAMINATED GLASS AND LAMINATED GLASS**

(30) Priority: 09.03.2005 JP 2005066009
(71) Applicant: SEKISUI CHEMICAL CO., LTD., Osaka-shi, Osaka 530-8565 (JP)
(72) Inventor: MARUMOTO, Tadashi, uchicho, Koka-shi, Shiga, 5288585 (JP)
(74) Representative: Hart Davis, Jason
(86) International application number: PCT/JP2006/304473
(87) International publication number: WO 2006/095770

(57) **Abstract**

It is an object of the present invention to provide an interlayer film for a laminated glass which can prevent the formation of a colored spot in a metal coating on a glass surface due to remaining alkali metal, has excellent penetration resistance and hardly causes temporal changes in the interlayer film's adhesion to glass and buildup (colored streaks of an interlayer film for a laminated glass), and a laminated glass.

The present invention is directed to an interlayer film for a laminated glass, which contains a matrix resin, a liquid plasticizer, acetyl acetone, alkali metal and at least one kind of metal selected from the group consisting of magnesium and alkaline earth metal, the content of the alkali metal being 20 to 120 ppm, the content of at least one kind of metal selected from the group consisting of magnesium and alkaline earth metal being 15 ppm or more and less than 60 ppm, and the content of the acetyl acetone being 0.008 parts by weight or more with respect to 100 parts by weight of the matrix resin.

## Description

### TECHNICAL FIELD

The present invention relates to an interlayer film for a laminated glass which can prevent the formation of a colored spot in a metal coating on a glass surface due to remaining alkali metal, has excellent penetration resistance and hardly causes temporal changes in the interlayer film's adhesion to glass and buildup (colored streaks of an interlayer film for a laminated glass), and relates to a laminated glass.

### BACKGROUND ART

Since less fragments of broken laminated glasses scatter and laminated glasses are safe even though the laminated glass is subjected to an external impact to break, they are widely employed in the windowpanes of vehicles such as automobiles, aircrafts, buildings and the like. Examples of laminated glasses include a laminated glass obtained by interposing an interlayer film for a laminated glass comprising, for example, a polyvinyl acetal resin such as a polyvinyl butyral resin plasticized with a plasticizer between at least a pair of glass and unifying them.

Among such laminated glasses, a laminated glass having a metal coating layer in an interface between an interlayer film for a laminated glass and a glass plate is in widespread use as a heat ray reflecting laminated glass or a low reflection laminated glass (see Patent Document No. 1).

By the way, in an interlayer film for a laminated glass used in such laminated glasses, on the occasion of producing it, an acid solution such as hydrogen chloride is added, and further an alkali solution such as a solution of sodium hydroxide or a solution of potassium hydroxide is also added for the purpose of neutralizing this acid solution. Therefore, alkali metals such as sodium and potassium derived from the alkali solution remained in the interlayer film for a laminated glass.

This alkali metal has a role of controlling the adhesion between the interlayer film for a laminated glass and the glass plate, but when such an interlayer film for a laminated glass is used in a heat ray reflecting laminated glass and the like, there was a problem that the remaining alkali metal in the interlayer film for a laminated glass reacts with a metal coating layer to produce a colored spot in a metal coating on a glass surface.
Patent Document No. 1: Japanese Kokai Publication 2000-290044

### DISCLOSURE OF THE INVENTION

### PROBLEMS WHICH THE INVENTION IS TO SOLVE

In view of the above-mentioned state of the art, the present invention aims to provide an interlayer film for a laminated glass which can prevent the formation of a colored spot in a metal coating on a glass surface due to remaining alkali metal, has excellent penetration resistance and hardly causes temporal changes in the interlayer film's adhesion to glass and buildup (colored streaks of an interlayer film for a laminated glass), and a laminated glass.

### MEANS FOR SOLVING THE OBJECT

The present invention provides an interlayer film for a laminated glass, which contains a matrix resin, a liquid plasticizer, acetyl acetone, alkali metal and at least one kind of metal selected from the group consisting of magnesium and alkaline earth metal, the content of the alkali metal being 20 to 120 ppm, the content of at least one kind of metal selected from the group consisting of magnesium and alkaline earth metal being 15 ppm or more and less than 60 ppm, and the content of the acetyl acetone being 0.008 parts by weight or more with respect to 100 parts by weight of the matrix resin.
Hereinafter, the present invention will be described in detail.

The present inventors investigated a method of reducing the amount of the remaining alkali metal by techniques such as improving of a production method of interlayer films for a laminated glass, and they have found that the formation of a colored spot in a metal coating on a glass surface can be effectively inhibited in an interlayer film for a laminated glass in which the amount of the remaining alkali metal became a trace quantity like this. However, when the remaining alkali metal is reduced to a trace quantity like this, a problem arose that the adhesion between the interlayer film for a laminated glass and the glass plate is abnormally enhanced and the penetration resistance of a laminated glass to be obtained is low. Further, there was a problem that even though an amount of alkali metal is adjusted to a level that does not produce the colored spot in a metal coating on a glass surface and does not cause the abnormally-enhanced adhesion, the adhesion varies with time or the buildup (colored streaks of an interlayer film for a laminated glass) in an extruder is produced.
On this problem, the present inventors contemplated reducing the formation of a colored spot in a metal coating on a glass surface of a laminated glass to be obtained and improving the penetration resistance of a laminated glass to be obtained by adding magnesium or alkaline earth metal to an interlayer film for a laminated glass in which an amount of alkali metal is reduced, but effects of magnesium and alkaline earth metal to control the adhesion is inadequate and magnesium and alkaline earth metal needed to be added in an extreme amount in order to improve the penetration resistance. The present inventors also contemplated improving the penetration resistance of a laminated glass to be obtained by adding a small amount of alkali metal to an interlayer film for a laminated glass containing magnesium or alkaline earth metal, but simultaneous pursuit of improvement in the penetration resistance and inhibition of the formation of a colored spot in a metal coating on a glass surface was difficult.
The present inventors made earnest investigations, and consequently found that by using acetyl acetone as an adhesion control agent in combination with alkali metal and magnesium or alkaline earth metal and specifying the contents of these components within a given range, a laminated glass simultaneously having prevention of the formation of a colored spot in a metal coating on a glass surface and adequate penetration resistance can be attained. These findings have now led to completion of the present invention.

The interlayer film for a laminated glass of the present invention contains a matrix resin, a liquid plasticizer, acetyl acetone, alkali metal and at least one kind of metal selected from the group consisting of magnesium and alkaline earth metal.

The above-mentioned matrix resin is not particularly limited, and for example, a polyvinyl acetal resin and the like are suitable. The above-mentioned polyvinyl acetal resin is not particularly limited as long as it is a polyvinyl acetal resin obtained by acetalizing polyvinyl alcohol with aldehyde, but a polyvinyl butyral resin is suitable. Further, two or more kinds of polyvinyl acetal resins may be used in combination as required.
A preferred lower limit of the acetalization degree of the above-mentioned polyvinyl acetal resin is 40% and a preferred upper limit is 85%, and a more preferred lower limit is 60% and a more preferred upper limit is 75%.

The above-mentioned polyvinyl acetal resin can be prepared by acetalizing polyvinyl alcohol with aldehyde.
The above-mentioned polyvinyl alcohol to be a raw material can be normally obtained by saponifying polyvinyl acetate, and polyvinyl alcohol having a saponification degree of 80 to 99.8 mol% is generally used.
Further, a polymerization degree of the above-mentioned polyvinyl alcohol is preferably 200 in the lower limit and 3000 in the upper limit. When the polymerization degree is less than 200, the penetration resistance of the laminated glass to be obtained may be deteriorated, and when the polymerization degree is more than 3000, the moldability of the resin film may be deteriorated and in addition the rigidity of the resin film becomes too high and therefore the processability may be deteriorated. It is more preferably 500 in the lower limit and 2000 in the upper limit.

The above-mentioned aldehyde is not particularly limited, but generally, aldehyde having 1 to 10 carbon atoms is suitably used. The above-mentioned aldehyde having 1 to 10 carbon atoms is not particularly limited and examples of the aldehydes include n-butyl aldehyde, isobutyl aldehyde, n-valeraldehyde, 2-ethylbutyl aldehyde, n-hexyl aldehyde, n-octyl aldehyde, n-nonyl aldehyde, n-decyl aldehyde, formaldehyde, acetaldehyde and benzaldehyde. Among others, n-butyl aldehyde, n-hexyl aldehyde and n-valeraldehyde are preferred, and n-butyl aldehyde having 4 carbon atoms is more preferred. These aldehydes may be used singly or in combination of two or more kinds.

The above-mentioned liquid plasticizer is not particularly limited and examples of the plasticizers include dihexyl adipate, triethylene glycol-di-2-ethylhexanoate, tetraethylene glycol-di-2-ethylbutyrate, tetraethylene glycol-di-heptanoate, triethylene glycol-di-heptanoate and the like.

As the above-mentioned liquid plasticizer, publicly known plasticizers for an interlayer film for a laminated glass can be used in addition to the above-mentioned liquid plasticizers. Such a liquid plasticizer is not particularly limited and includes, for example, organic type plasticizers such as monobasic organic acid ester and polybasic organic acid ester; and phosphoric acid type plasticizers such as organic phosphoric acid type plasticizer and organic phosphorous acid type plasticizer.

The above-mentioned monobasic organic acid ester type plasticizer is not particularly limited and includes, for example, glycol type esters obtained by a reaction of glycol such as triethylene glycol, tetraethylene glycol or tripropylene glycol with monobasic organic acid such as butyric acid, isobutyric acid, caproic acid, 2-ethylbutyric acid, heptylic acid, n-octylic acid, 2-ethylhexylic acid, pelargonic acid (n-nonylic acid) or decylic acid. Among others, triethylene glycols such as triethylene glycol-dicaproate ester, triethylene glycol-di-2-ethylbutyrate ester, triethylene glycol-di-n-octylate ester and triethylene glycol-di-2-ethylhexylate ester, and the like are suitable.

The above-mentioned polybasic organic acid ester type plasticizer is not particularly limited and examples of the plasticizers include esters of polybasic organic acids such as adipic acid, sebacic acid and azelaic acid and straight-chain or branched alcohols having 4 to 8 carbon atoms. Among others, dibutyl sebacate ester, dioctyl azelate ester, dibutyl carbitol adipate ester and the like are suitable.
The above-mentioned organic phosphate type plasticizer is not particularly limited and examples of the plasticizers include tributoxyethyl phosphate, isodecylphenyl phosphate, triisopropyl phosphate and the like.

The interlayer film for a laminated glass of the present invention contains alkali metal and at least one kind of metal selected from the group consisting of magnesium and alkaline earth metal. Further, these metals include metals in all states such as a state of ion.
In the interlayer film for a laminated glass of the present invention, the content of at least one kind of metal selected from the group consisting of magnesium and alkaline earth metal is 15 ppm or more and less than 60 ppm. When this content is less than 15 ppm, the adhesion between the above-mentioned interlayer film for a laminated glass and the glass plate is abnormally enhanced and the penetration resistance is reduced throughout the laminated glass even though using alkali metal in an amount of level that does not produce the colored spot in a metal coating on a glass surface in combination, and also when this content is 60 ppm or more, an effect of further improving the penetration resistance cannot be attained and this content causes the formation of a colored spot in a metal coating on a glass surface. A preferred lower limit of this content is 20 ppm and a preferred upper limit is 50 ppm because it is particularly easy to control the adhesion between the interlayer film for a laminated glass and the glass plate.
Among others, magnesium is suitable. The interlayer film for a laminated glass of the present invention can more effectively inhibit the formation of a colored spot in a metal coating on a glass surface and the abnormally-enhanced penetration resistance by containing magnesium.
A form of mixing magnesium in the interlayer film for a laminated glass of the present invention is not particularly limited, but it is preferred to mix the magnesium in the form of magnesium hexanoate, magnesium heptanoate, magnesium octanoate and magnesium nonanoate.

In the interlayer film for a laminated glass of the present invention, a lower limit of the content of the above-mentioned alkali metal is 20 ppm and an upper limit is 120 ppm. When the content of the above-mentioned alkali metal is less than 20 ppm, the adhesion between the above-mentioned interlayer film for a laminated glass and the glass plate is abnormally enhanced and the penetration resistance is reduced throughout the laminated glass, and when it is more than 120 ppm, the colored spot in a metal coating on a glass surface is produced in the laminated glass.
The above-mentioned alkali metal may be one derived from an alkali solution used in a step of producing a matrix resin or may be one separately added in the form of alkyl salt and the like.
A form of mixing alkali metal in the interlayer film for a laminated glass of the present invention is not particularly limited but it is preferred to mix the alkali metal in the form of potassium hexanoate, potassium heptanoate, potassium octanoate and potassium nonanoate.

As for an amount of the above-mentioned acetyl acetone to be added, a lower limit is 0.008 parts by weight with respect to 100 parts by weight of the above-mentioned matrix resin. When this amount is less than 0.008 parts by weight with respect to 100 parts by weight, an effect of adding the acetyl acetone cannot be attained. A preferred lower limit is 0.01 parts by weight. Further, an upper limit of the amount of the above-mentioned acetyl acetone to be added is not particularly limited, but since the adhesion between the interlayer film for a laminated glass and the glass may increase too much for some kinds of glass, a preferred upper limit is 1 part by weight, a more preferred upper limit is 0.06 parts by weight and a further more preferred upper limit is 0.012 parts by weight.

The interlayer film for a laminated glass of the present invention preferably contains an ultraviolet absorber. The above-mentioned ultraviolet absorber is not particularly limited and includes, for example, benzotriazole type compounds, benzophenone type compounds, triazine type compounds, benzoate type compounds and the like.

The above-mentioned benzotriazole type compound is not particularly limited and includes, for example, 2-(2'-hydroxy-5'-methylphenyl)benzotriazole (Tinuvin P produced by CIBA-GEIGY Corporation), 2-(2'-hydroxy-3',5'-di-tert-butylphenyl)benzotriazole (Tinuvin 320 produced by CIBA-GEIGY Corporation), 2-(2'-hydroxy-3'-tert-butyl-5'-methylphenyl)-5-chlorobenzotriazole (Tinuvin 326 produced by CIBA-GEIGY Corporation), and 2-(2'-hydroxy-3',5'-di-amylphenyl)benzotriazole (Tinuvin 328 produced by CIBA-GEIGY Corporation) and the like.

The above-mentioned benzophenone type compound is not particularly limited and includes, for example, octabenzone (Chimassorb 81 produced by CIBA-GEIGY Corporation) and the like.
The above-mentioned triazine type compound is not particularly limited and includes, for example, 2-(4,6-diphenyl-1,3,5-triazine-2-yl)-5-[(hexyl)oxy]-phenol (Tinuvin 1577FF produced by CIBA-GEIGY Corporation) and the like.
The above-mentioned benzoate compound is not particularly limited and includes, for example, 2,4-di-tert-butylphenyl-3,5-di-tert-butyl-4-hydroxybenzoate (Tinuvin 120 produced by CIBA-GEIGY Corporation) and the like.

The content of the above-mentioned ultraviolet absorber in the interlayer film for a laminated glass of the present invention preferably is 0.01 parts by weight in the lower limit with respect to 100 parts by weight of the matrix resin and 5.0 parts by weight in the upper limit. When this content is less than 0.01 parts by weight, an effect of ultraviolet absorber ray may be hardly attained, and when it is more than 5.0 parts by weight, this content may cause the weather resistance of resin to deteriorate. A more preferred lower limit is 0.05 parts by weight and a more preferred upper limit is 1.0 part by weight.

The interlayer film for a laminated glass of the present invention may further contains publicly known additives such as a light stabilizer, a surfactant, a flame retarder, an antistatic agent, a moisture resistance agent, a heat reflector and a heat absorbing agent as required.

A thickness of the interlayer film for a laminated glass of the present invention is preferably 150 µm in the lower limit and 3000 µm in the upper limit. When the thickness is less than 150 µm, in the case of preparing a laminated glass using this film, the penetration resistance of the laminated glass may be deteriorated, and when the thickness is more than 3000 µm, a whole thickness of the laminated glass to be prepared becomes too large. It is more preferably 250 µm in the lower limit and 800 µm in the upper limit.

A method of producing the interlayer film for a laminated glass of the present invention is not particularly limited and examples of the methods include the following methods.
First, alkali metals such as sodium and potassium derived from the alkali solution remains in an amount about 200 to 500 ppm in the above-mentioned polyvinyl acetal resin since the above-mentioned matrix resin is neutralized with alkali in the process of production. The above-mentioned matrix resin is washed well with water since this remaining alkali metal causes the formation of a colored spot in a metal coating on a glass surface. An amount of the remaining alkali metal can be reduced to the order of 10 ppm at the maximum by the above-mentioned water washing and the like.
In the interlayer film for a laminated glass of the present invention, since the content of the alkali metal is 20 to 120 ppm and the content of at least one kind of metal selected from the group consisting of magnesium and alkaline earth metal is 15 ppm or more and less than 60 ppm, an alkyl salt having alkali metal and an alkyl salt having at least one kind of metal selected from the group consisting of magnesium and alkaline earth metal are added to adjust the composition. Then, acetyl acetone is added to the matrix resin, and further a liquid plasticizer, and an additive to be mixed as required are added, and the resulting mixture is kneaded and molded.

A method of the above-mentioned kneading is not particularly limited and includes, for example, a method of using an extruder, a plastograph, a kneader, a Banbury mixer, calendaring roll and the like. Among others, a method of using an extruder is suitable because it is suitable for continuous production.

A method of the above-mentioned molding is not particularly limited and includes, for example, extrusion, calendaring, pressing and the like.

A laminated glass formed by using the interlayer film for a laminated glass of the present invention also constitutes the present invention.

The laminated glass of the present invention is a laminated glass, which has the above-mentioned interlayer film for a laminated glass and two glass plates supporting the above-mentioned interlayer film for a laminated glass by sandwiching, and has a metal coating layer in at least one interface of two interfaces between the interlayer film for a laminated glass and the glass plates.

A material of the above-mentioned metal coating layer is not particularly limited and examples of the materials include metals such as gold, silver, copper and aluminum, and metal oxides such as iron oxide, chromium oxide, titanium oxide, tin dioxide, indium oxide and tungsten oxide.

A method of producing the above-mentioned metal coating layer is not particularly limited and includes, for example, a vacuum deposition process.

A method of producing the laminated glass of the present invention is not particularly limited and a publicly known method of producing a laminated glass can be employed.

The laminated glass of the present invention can be suitably used as, for example, a windshield of an automobile because it is constituted as described above and therefore it can prevent the formation of a colored spot in a metal coating on a glass surface due to remaining alkali metal and the abnormally-enhanced adhesion between the interlayer film for a laminated glass and the glass plate.

### EFFECT OF THE INVENTION

The present invention can provide an interlayer film for a laminated glass which can prevent the formation of a colored spot in a metal coating on a glass surface due to remaining alkali metal, has excellent penetration resistance and hardly causes temporal changes in the interlayer film's adhesion to glass and buildup (colored streaks of an interlayer film for a laminated glass), and relates to a laminated glass.

### BEST MODE FOR CARRYING OUT THE INVENTION

Hereinafter, the present invention will be described in details with reference to examples, however the present invention is not limited to these examples.

### (A) Observation of changes in a metal quantity versus changes in a laminated glass

### (Experimental Example 1)

### (1) Synthesis of matrix resin

275 parts by weight of polyvinyl alcohol having an average polymerization degree of 1700 and a saponification degree of 99.2 mol% was added to 2890 parts by weight of pure water and the mixture was dissolved by heating. A temperature of this reaction system was adjusted to 15°C, and to this solution, 201 parts by weight of a 35 weight % hydrochloric acid and 157 parts by weight of n-butyl aldehyde were added, and a temperature of this mixture was kept at this temperature to precipitate a reactant. Then, the reaction system was kept at 60°C for 3 hours to complete the reaction. Then, the reaction system was cleaned with excessive water to wash out unreacted n-butyl aldehyde, and the hydrochloric acid catalyst was neutralized with an aqueous solution of sodium hydroxide, a general neutralizer, and further the reaction system was washed for 2 hours with excessive water and dried to obtain a polyvinyl butyral resin in white powder form. An average butyralization degree of this resin was 68.5 mol%.

### (2) Water washing of matrix resin

The obtained polyvinyl butyral resin was washed by stirring for 12 hours in hot water. This operation was repeated three times. By adding magnesium heptanoate and potassium nonanoate to this washed resin, the contents of magnesium and alkali metal were adjusted to 20 ppm and 45 ppm, respectively. An amount of each metal was measured by ICP emission spectrometry.

### (3) Production of interlayer film for a laminated glass

To 100 parts by weight of the polyvinyl butyral resin obtained, triethylene glycol bis(2-ethylhexanoate) as a liquid plasticizer and 0.1 parts by weight of acetyl acetone were added, and the mixture was kneaded with a plasto machine and then was extruded into sheet form from a mold with an extruder to obtain an interlayer film for a laminated glass having a thickness of 745 µm.

### (4) Production of laminated glass

The obtained interlayer film for a laminated glass was sandwiched between two float glasses (30 cm long by 30 cm wide by 2.5 mm thick), and this was put in a rubber bag and deaerated at a vacuum of 2.6 kPa for 20 minutes, and then this was moved into an oven in a state of being deaerated and subjected to vacuum press while being further retained at 90°C for 30 minutes. A laminated glass formed preliminarily by thus attaching the float glasses to each other by applying pressure was subjected to attaching by pressure under the conditions of 135°C and a pressure of 1.2 MPa for 20 minutes in an autoclave to obtain a laminated glass.

### (Experimental Example 2)

An interlayer film for a laminated glass and a laminated glass were produced by following the same procedure as in Experimental Example 1 except for adjusting the content of magnesium to 35 ppm and the content of alkali metal to 79 ppm by adding magnesium heptanoate and potassium nonanoate.

### (Experimental Example 3)

An interlayer film for a laminated glass and a laminated glass were produced by following the same procedure as in Experimental Example 1 except for adjusting the content of magnesium to 50 ppm and the content of alkali metal to 113 ppm by adding magnesium heptanoate and potassium nonanoate.

### (Experimental Example 4)

An interlayer film for a laminated glass and a laminated glass were produced by following the same procedure as in Experimental Example 1 except for adjusting the content of magnesium to 75 ppm and the content of alkali metal to 169 ppm by adding magnesium heptanoate and potassium nonanoate.

### (Experimental Example 5)

An interlayer film for a laminated glass and a laminated glass were produced by following the same procedure as in Experimental Example 1 except for adjusting the content of magnesium to 100 ppm and the content of alkali metal to 225 ppm by adding magnesium heptanoate and potassium nonanoate.

### <Evaluation>

### (1) Measurement of haze value

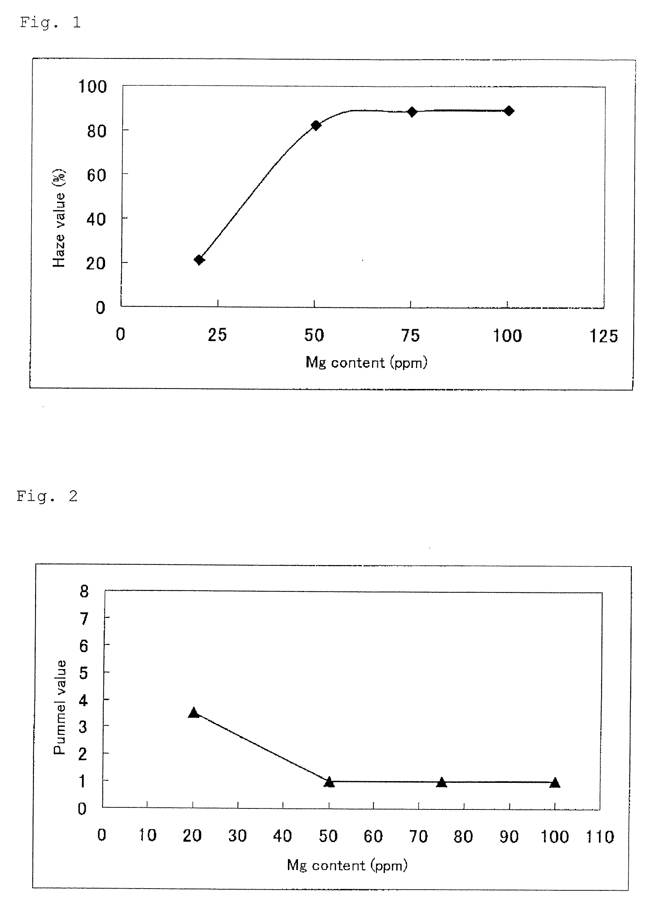

Each of the laminated glasses obtained in Experimental Examples 1, 3, 4 and 5 was immersed in water of 23°C for 24 hours, and a haze value of the laminated glass was measured according to JIS K 6714 (1995). A graph derived from these results is shown in Fig. 1.

### (2) Measurement of pummel value

A temperature of each laminated glass obtained in Experimental Examples 1, 3, 4 and 5 was adjusted within a range of -18°C±0.6°C for 16 hours, and a center area (an area of 150 mm long by 150 mm wide) of this laminated glass was struck with a hammer having a head weight of 0.45 kg and the laminated glass was milled till a diameter of a particle of milled glass becomes 6 mm or less, and a percentage of an interlayer film exposed by partial peeling off of the glass was measured and a pummel value was determined from the following Table 1.
Incidentally, a pummel value is an index indicating a degree of the adhesion between an interlayer film for a laminated glass and a glass plate, and it is a value specified by a percentage (a ratio of area) of an interlayer film exposed which is determined by adjusting a temperature of the laminated glass within a range of -18°C±0.6°C for 16 hours, striking a center area (an area of 150 mm long by 150 mm wide) of this laminated glass with a hammer having a head weight of 0.45 kg, milling the laminated glass till a diameter of a particle of milled glass becomes 6 mm or less, and measuring an interlayer film exposed by partial peeling off of the glass, and it is defined in Table 1.
A graph derived from these results is shown in Fig. 2.

**[Table 1]**

| Percentage of Exposed Interlayer Film (%) | Pummel Value |
|---|---|
| 100 | 0 |
| 90 | 1 |
| 85 | 2 |
| 60 | 3 |
| 40 | 4 |
| 20 | 5 |
| 10 | 6 |
| 5 | 7 |
| 2 or less | 8 |

### (3) Measurement of distance of whitened portion

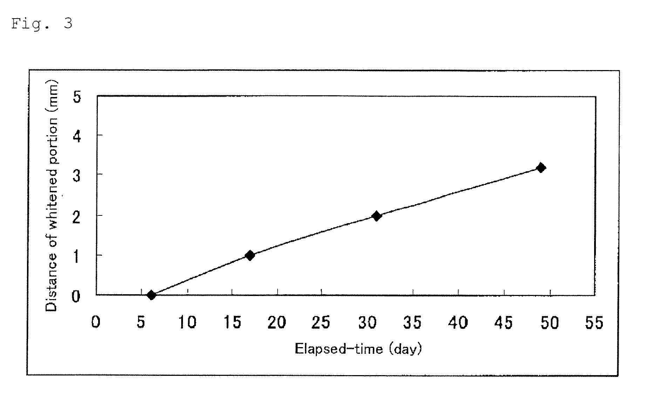

The laminated glass obtained in Experimental Example 2 was placed under the conditions of 50°C and a humidity of 97%, a distance of a whitened portion from the side of the laminated glass versus an elapsed-time was measured.
A graph derived from these results is shown in Fig. 3.

### (B) Formation condition of colored spot in metal coating on glass surface and measurement of pummel value

### (Example 1)

An interlayer film for a laminated glass was produced by following the same procedure as in Experimental Example 1.
The obtained interlayer film for a laminated glass was sandwiched between two float glasses (30 cm long by 30 cm wide by 2.5 mm thick) provided with a metal coating layer from its both ends, and this was put in a rubber bag and deaerated at a vacuum of 2.6 kPa for 20 minutes, and then this was moved into an oven in a state of being deaerated and subjected to vacuum press while being further retained at 90°C for 30 minutes. A laminated glass formed preliminarily by thus attaching the float glasses to each other by applying pressure was subjected to attaching by pressure under the conditions of 135°C and a pressure of 1.2 MPa for 20 minutes in an autoclave to obtain a laminated glass.

### (Comparative Example 1)

An interlayer film for a laminated glass and a laminated glass were produced by following the same procedure as in Example 1 except for not adding acetyl acetone.

### (Comparative Example 2)

An interlayer film for a laminated glass and a laminated glass were produced by following the same procedure as in Example 1 except for adjusting the content of magnesium to 10 ppm by adjusting the amount of magnesium heptanoate.

### (Comparative Example 3)

An interlayer film for a laminated glass and a laminated glass were produced by following the same procedure as in Example 1 except for adjusting the content of magnesium to 60 ppm by adjusting the amount of magnesium heptanoate.

### (Comparative Example 4)

An interlayer film for a laminated glass and a laminated glass were produced by following the same procedure as in Example 1 except for adjusting the content of alkali metal to 10 ppm by adjusting the amount of potassium nonanoate.

### (Comparative Example 5)

An interlayer film for a laminated glass and a laminated glass were produced by following the same procedure as in Example 1 except for adjusting the content of alkali metal to 130 ppm by adjusting the amount of potassium nonanoate.

### <Evaluation>

On each laminated glass obtained in Example 1 and Comparative Examples 1 to 5, the following evaluations were performed. The results of evaluations are shown in Table 2.

### (1) Check of formation of colored spot in metal coating on glass surface

The obtained laminated glass was placed under the conditions of 50°C and a humidity of 97% for 24 hours and visually rated according to the following criteria.
○ There was not the formation of a colored spot in a metal coating on a glass surface.
× There was the formation of a colored spot in a metal coating on a glass surface.

### (2) Measurement of pummel value

A temperature of the obtained laminated glass was adjusted within a range of -18°C±0.6°C for 16 hours, and a center area (an area of 150 mm long by 150 mm wide) of this laminated glass was struck with a hammer having a head weight of 0.45 kg and the laminated glass was milled till a diameter of a particle of milled glass becomes 6 mm or less, and a percentage of an interlayer film exposed by partial peeling off of the glass was measured and a pummel value was determined from the above-mentioned Table 1. The pummel value was evaluated according to the following criteria.
○ pummel value: 3 to 6
× pummel value: 0 to 2, and 7 to 8

**[Table 2]**

| | Mg Content (ppm) | Alkali Metal Content (ppm) | Acetyl Acetone (parts by weight) | Corrosion | Pummel Value |
|---|---|---|---|---|---|
| Example 1 | 20 | 45 | 0.1 | ○ | ○ |
| Comparative Example 1 | 20 | 45 | 0 | ○ | × |
| Comparative Example 2 | 10 | 45 | 0.1 | ○ | × |
| Comparative Example 3 | 60 | 45 | 0.1 | × | × |
| Comparative Example 4 | 20 | 10 | 0.1 | ○ | × |
| Comparative Example 5 | 20 | 130 | 0.1 | × | × |

### (Example 2)

### (1) Synthesis of matrix resin

275 parts by weight of polyvinyl alcohol having an average polymerization degree of 1700 and a saponification degree of 99.2 mol% was added to 2890 parts by weight of pure water and the mixture was dissolved by heating. A temperature of this reaction system was adjusted to 15°C, and to this solution, 201 parts by weight of a 35 weight % hydrochloric acid and 157 parts by weight of n-butyl aldehyde were added, and a temperature of this mixture was kept at this temperature to precipitate a reactant. Then, the reaction system was kept at 60°C for 3 hours to complete the reaction. Then, the reaction system was cleaned with excessive water to wash out unreacted n-butyl aldehyde, and the hydrochloric acid catalyst was neutralized with an aqueous solution of sodium hydroxide, a general neutralizer, and further the reaction system was washed for 2 hours with excessive water and dried to obtain a polyvinyl butyral resin in white powder form. An average butyralization degree of this resin was 68.5 mol%.

### (2) Water washing of matrix resin

The obtained polyvinyl butyral resin was washed by stirring it for 12 hours in hot water. This operation was repeated three times. By adding magnesium hexanoate and potassium octanoate to this washed resin, the contents of magnesium and alkali metal were adjusted to 15 ppm and 34 ppm, respectively. An amount of each metal was measured by ICP emission spectrometry.

### (3) Production of interlayer film for a laminated glass

To 100 parts by weight of the polyvinyl butyral resin obtained, triethylene glycol bis(2-ethylhexanoate) as a liquid plasticizer and 0.1 parts by weight of acetyl acetone were added, and the mixture was kneaded with a plasto machine and then was extruded into sheet form from a mold with an extruder to obtain an interlayer film for a laminated glass having a thickness of 745 µm.

### (4) Production of laminated glass

The obtained interlayer film for a laminated glass was sandwiched between two float glasses (30 cm long by 30 cm wide by 2.5 mm thick) provided with a metal coating layer from its both ends, and this was put in a rubber bag and deaerated at a vacuum of 2.6 kPa for 20 minutes, and then this was moved into an oven in a state of being deaerated and subjected to vacuum press while being further retained at 90°C for 30 minutes. A laminated glass formed preliminarily by thus attaching the float glasses to each other by applying pressure was subjected to attaching by pressure under the conditions of 135°C and a pressure of 1.2 MPa for 20 minutes in an autoclave to obtain a laminated glass.

### (Example 3)

An interlayer film for a laminated glass and a laminated glass were produced by following the same procedure as in Example 2 except for adjusting the content of magnesium to 40 ppm and the content of alkali metal to 90 ppm by adding magnesium hexanoate and potassium octanoate.

### (Example 4)

An interlayer film for a laminated glass and a laminated glass were produced by following the same procedure as in Example 2 except for adjusting the content of magnesium to 40 ppm and the content of alkali metal to 90 ppm by adding magnesium hexanoate and potassium octanoate and changing the amount of acetyl acetone to be added to 0.04 parts by weight.

### (Example 5)

An interlayer film for a laminated glass and a laminated glass were produced by following the same procedure as in Example 2 except for adjusting the content of magnesium to 40 ppm and the content of alkali metal to 90 ppm by adding magnesium hexanoate and potassium octanoate and changing the amount of acetyl acetone to be added to 0.02 parts by weight.

### (Example 6)

An interlayer film for a laminated glass and a laminated glass were produced by following the same procedure as in Example 2 except for adjusting the content of magnesium to 40 ppm and the content of alkali metal to 90 ppm by adding magnesium hexanoate and potassium octanoate and changing the amount of acetyl acetone to be added to 0.01 parts by weight.

### (Example 7)

An interlayer film for a laminated glass and a laminated glass were produced by following the same procedure as in Example 2 except for adjusting the content of magnesium to 15 ppm and the content of alkali metal to 49 ppm by adding magnesium octanoate and potassium hexanoate in place of adding magnesium hexanoate and potassium octanoate.

### (Example 8)

An interlayer film for a laminated glass and a laminated glass were produced by following the same procedure as in Example 2 except for adjusting the content of alkali metal to 41 ppm by adding potassium octanoate and the content of magnesium to 15 ppm by adding magnesium octanoate in place of adding magnesium hexanoate.

### (Example 9)

An interlayer film for a laminated glass and a laminated glass were produced by following the same procedure as in Example 2 except for adjusting the content of magnesium to 20 ppm by adding magnesium hexanoate and the content of alkali metal to 53 ppm by adding potassium hexanoate in place of adding potassium octanoate.

### (Comparative Example 6)

An interlayer film for a laminated glass and a laminated glass were produced by following the same procedure as in Example 2 except for adjusting the content of magnesium to 60 ppm by adding magnesium acetate in place of adding magnesium hexanoate, changing the amount of acetyl acetone to be added to 0.01 parts by weight, and not adding potassium octanoate.

### (Comparative Example 7)

An interlayer film for a laminated glass and a laminated glass were produced by following the same procedure as in Comparative Example 6 except for further adding 0.05 parts by weight of silicone oil.

### (Comparative Example 8)

An interlayer film for a laminated glass and a laminated glass were produced by following the same procedure as in Comparative Example 6 except for adjusting the content of magnesium to 60 ppm by adding magnesium hexanoate in place of adding magnesium acetate.

### (Comparative Example 9)

An interlayer film for a laminated glass and a laminated glass were produced by following the same procedure as in Comparative Example 8 except for further adding 0.05 parts by weight of silicone oil.

### <Evaluation>

On each laminated glass obtained in Examples 2 to 9 and Comparative Examples 6 to 9, the following evaluations were performed. The results of evaluations are shown in Table 3.

### (1) Check of formation of colored spot in metal coating on glass surface

The obtained laminated glass was placed under the conditions of 50°C and a humidity of 97% for 24 hours and visually rated according to the following criteria.
○ There was not the formation of a colored spot in a metal coating on a glass surface.
× There was the formation of a colored spot in a metal coating on a glass surface.

### (2) Measurement of pummel value

A temperature of the obtained laminated glass was adjusted within a range of -18°C±0.6°C for 16 hours, and a center area (an area of 150 mm long by 150 mm wide) of this laminated glass was struck with a hammer having a head weight of 0.45 kg and the laminated glass was milled till a diameter of a particle of milled glass becomes 6 mm or less, and a percentage of an interlayer film exposed by partial peeling off of the glass was measured, and a pummel value was determined from the above-mentioned Table 1.

### (3) Temporal changes in pummel value

The obtained laminated glass was left standing at 50°C, and its pummel value was measured after a lapse of two weeks and four weeks, and changes in pummel value from an initial to a lapse of two weeks and four weeks were rated according to the following criteria.
○ There was little change in pummel value.
× There was a large change in pummel value.

### (4) Formation of Buildup (colored streaks of an interlayer film for a laminated glass)

The obtained laminated glass was visually checked and the formation of buildup (colored streaks of an interlayer film for a laminated glass) was rated according to the following criteria.
○ The buildup was hardly recognized.
× Many buildups were recognized.

**[Table 3]**

| | Mg Content (ppm) | Alkali Metal Content (ppm) | Acetyl Acetone (parts by weight) | Another additive (parts by weight) | Corrosion | Pummel Value | Temporal changes in pummel Value | Formation of Buildup |
|---|---|---|---|---|---|---|---|---|
| Example 2 | 15 | 34 | 0.1 | - | ○ | 3 | ○ | ○ |
| Example 3 | 40 | 90 | 0.1 | - | ○ | 1 | ○ | ○ |
| Example 4 | 40 | 90 | 0.04 | - | ○ | 3 | ○ | ○ |
| Example 5 | 40 | 90 | 0.02 | - | ○ | 3 | ○ | ○ |
| Example 6 | 40 | 90 | 0.01 | - | ○ | 3 | ○ | ○ |
| Example 7 | 15 | 49 | 0.1 | - | ○ | 3 | ○ | ○ |
| Example 8 | 15 | 41 | 0.1 | - | ○ | 3 | ○ | ○ |
| Example 9 | 20 | 53 | 0.1 | - | ○ | 3 | ○ | ○ |
| Comparative Example 6 | 60 | - | 0.01 | - | × | 1 | ○ | × |
| Comparative Example 7 | 60 | - | 0.01 | 0.05 | × | 0 | × | × |
| Comparative Example 8 | 60 | - | 0.01 | - | ○ | 7 | ○ | ○ |
| Comparative Example 9 | 60 | - | 0.01 | 0.05 | × | 5 | × | ○ |

### INDUSTRIAL APPLICABILITY

The present invention provides an interlayer film for a laminated glass which can prevent the formation of a colored spot in a metal coating on a glass surface due to remaining alkali metal, has excellent penetration resistance and hardly causes temporal changes in the interlayer film's adhesion to glass and buildup (colored streaks of an interlayer film for a laminated glass), and a laminated glass.

### BRIEF DESCRIPTION OF THE DRAWINGS

Fig. 1 is a graph showing measured results of haze values of laminated glasses obtained in Experimental Examples.
Fig. 2 is a graph showing measured results of pummel values of laminated glasses obtained in Experimental Examples.
Fig. 3 is a graph showing measured results of a distance of a whitened portion of laminated glasses obtained in Experimental Examples.

## Claims

1. An interlayer film for a laminated glass,
which contains a matrix resin, a liquid plasticizer, acetyl acetone, alkali metal and at least one kind of metal selected from the group consisting of magnesium and alkaline earth metal, the content of the alkali metal being 20 to 120 ppm, the content of at least one kind of metal selected from the group consisting of magnesium and alkaline earth metal being 15 ppm or more and less than 60 ppm, and the content of the acetyl acetone being 0.008 parts by weight or more with respect to 100 parts by weight of the matrix resin.

2. The interlayer film for a laminated glass according to Claim 1,
wherein at least one kind of metal selected from the group consisting of magnesium and alkaline earth metal is magnesium.

3. A laminated glass,
which has the interlayer film for a laminated glass according to Claim 1 or 2 and two glass plates supporting the interlayer film for a laminated glass by sandwiching, and has a metal coating layer in at least one interface of two interfaces between the interlayer film for a laminated glass and the glass plates.
